## Europäisches Patentamt

**European Patent Office**

**Office européen des brevets**

(11) Veröffentlichungsnummer: **0 127 053**
**A2**

# EUROPÄISCHE PATENTANMELDUNG

(21) Anmeldenummer: 84105465.3

(22) Anmeldetag: 14.05.84

(51) Int. Cl.³: **B 23 B 5/16**

(30) Priorität: 27.05.83 DE 3319319

(43) Veröffentlichungstag der Anmeldung:
05.12.84 Patentblatt 84/49

(84) Benannte Vertragsstaaten:
AT BE CH DE FR GB IT LI LU NL SE

(71) Anmelder: KRAFTWERK UNION
AKTIENGESELLSCHAFT
Wiesenstrasse 35
D-4330 Mülheim (Ruhr)(DE)

(72) Erfinder: Weber, Robert
Esperstrasse 23
D-8525 Uttenreuth(DE)

(72) Erfinder: Mechtold, Helmut
Zum Kesselgraben 2
D-8500 Nürnberg 141(DE)

(72) Erfinder: Bieselt, Roland, Dr.
Holbeinstrasse 7
D-6940 Weinheim(DE)

(72) Erfinder: Förner, Siegfried
Leipziger Strasse 69
D-8520 Erlangen(DE)

(74) Vertreter: Mehl, Ernst, Dipl.-Ing. et al,
Postfach 22 01 76
D-8000 München 22(DE)

(54) Arbeitsgerät zum Bearbeiten der Schnittstelle eines Rohres.

(57) Zur Bearbeitung der Schnittstelle (91) von Rohren (9), insbesondere vor dem Zusammenschweißen von Rohrenden, ist eine Zentrierung, ggf. auch ein Abdrehen und Aufweiten, erforderlich. Bekannte Zentriergeräte sind so ausgebildet, daß mit ihnen die Enden zweier zusammenzuschweißender Rohre nur gleichzeitig zentriert werden können. Solche Geräte sind nicht nur wegen ihrer Abmessung und ihres Gewichtes unhandlich; sie sind auch nicht brauchbar, wenn die Rohre mit axialem Versatz zusammengefügt werden sollen oder gar eine vorherige Bearbeitung der Schnittstellen erforderlich ist. Die Erfindung schafft hier Abhilfe mit einer in ein Rohrende einsetzbaren Zentriervorrichtung, deren Spannsystem zugleich zu ihrer Halterung in dem Rohr dient und die eine Kupplungsvorrichtung (7) zum Ansetzen eines Zusatzgerätes, z.B. einer weiteren, ebenso ausgebildeten Zentriervorrichtung, einer Aufweitvorrichtung oder einer Abdrehvorrichtung, aufweist.

FIG 1

Croydon Printing Company Ltd

0127053

KRAFTWERK UNION
AKTIENGESELLSCHAFT
MÜLHEIM

Unser Zeichen
VPA 83 P 8514 E

Arbeitsgerät zum Bearbeiten der Schnittstelle eines
Rohres

---

Die Erfindung betrifft ein Arbeitsgerät zum Bearbeiten
der Schnittstelle eines Rohres gemäß Oberbegriff von
Anspruch 1.

Arbeitsgeräte dieser Art werden benötigt, um die Schnittstellen von zwei miteinander zu verschweißenden Rohren
für diesen Schweißvorgang vorzubereiten. Da bei den
verschweißten Rohren nur ein sehr geringfügiger Versatz
der Schnittstellen der beiden Rohrenden zulässig ist,
müssen die beiden Rohre vor dem Schweißvorgang sehr sorgfältig ausgerichtet werden. Da die Rohre jedoch mitunter etwas von der Kreisform abweichen, läßt sich der·
Versatz der beiden Schnittstellen durch Ausrichten allein nicht immer in dem zugelassenen Toleranzbereich
halten. Das eine oder andere Rohrende muß dann zusätzlich zentriert d.h. in die Kreisform gedrückt oder gar
aufgeweitet werden.

Hierfür geeignete Arbeitsgeräte sind bekannt: Sie haben
zwei im axialen Abstand angeordnete, vom gleichen
Druckmotor gleichzeitig betätigbare Zentriervorrichtungen, von denen die eine in dem einen Rohrende und
die andere in dem zweiten Rohrende steckt; das Arbeitsgerät ist dementsprechend groß, schwer und daher schwierig zu handhaben.

Darüber hinaus werden von der Praxis folgende Forderungen gestellt, die sich mit den bekannten Arbeits-
Ba 1 Stl / 26.05.83

geräten nicht erfüllen lassen:

So sollte es beispielsweise möglich sein, die beiden Rohrenden getrennt voneinander zu zentrieren und zu vermessen, um so feststellen zu können, ob eine weitere Bearbeitung, insbesondere ein Abdrehen oder ein Aufweiten erforderlich ist.

Bei eventuell erforderlichen zusätzlichen Arbeitsgängen vor dem Ausrichten der Rohre sollte es nicht notwendig sein, die in den Rohrenden steckenden Zentriervorrichtungen wieder herauszunehmen. Vielmehr sollte diese Zentriervorrichtung für diese zusätzlichen Bearbeitungsvorgänge nutzbar sein, da diese ja in der Regel ein zentriertes Rohr voraussetzen; das ist beispielsweise beim Abdrehen oder auch beim Aufweiten der Fall.

Schließlich sollte es das Arbeitsgerät auch ermöglichen, die Rohre mit gegeneinander geneigten Mittelachsen miteinander zu verbinden. Ferner soll das Arbeitsgerät auch brauchbar sein wenn sich eine der beiden Schnittstellen an einem Rohrbogen ohne verlängerte Schenkel befindet.

Erfindungsgemäß gelingt die Lösung dieser Aufgaben durch ein Arbeitsgerät mit den im Anspruch 1 angegebenen Merkmalen.

Von den bekannten Arbeitsgeräten unterscheidet sich die Erfindung dadurch, daß hierbei zwei durch die Kupplungsvorrichtung trennbare Zentriervorrichtungen mit getrennten Druckmotoren vorgesehen sind: Dies ermöglicht es, die eine, entsprechend leichter und

0127053

einfacher zu handhabende Zentriervorrichtung in das eine Rohrende einzusetzen, dieses zu zentrieren und anschließend zu vermessen. Dies ist sogar bei Rohrbogen ohne verlängerten Schenkel möglich: Hierzu hat die Zentriervorrichtung auswechselbare und/oder in ihrer Länge einstellbare Druckstücke, die vorzugsweise nach einer vorgefertigten Schablone eingestellt werden, deren Abweichung von der Kreisform von dem Abstand der Druckstücke von der Schnittstelle des Rohrbogens abhängig ist. Auf diese Weise ist es dann möglich, auch die Schnittstelle eines solchen Rohrbogens in die Kreisform zu drücken, obwohl die Zentriervorrichtung in einem Bereich des Rohrbogens ansetzt, die mehr oder weniger von der Kreisform abweicht.

Nach dem Zentrieren des einen Rohrendes und der dann ohne weiteres möglichen Vermessung wird dann das zweite Rohrende mit einer zweiten, ebenso ausgebildeten Zentriervorrichtung zentriert und vermessen. Wird dabei ein durch die Zentriervorrichtung selbst nicht mehr ausgleichbarer Versatz festgestellt, so muß das eine oder andere Rohrende aufgeweitet werden. Hierzu ist es nicht mehr erforderlich, die Zentriervorrichtungen aus den Rohrenden herauszunehmen; vielmehr wird eine Aufweitvorrichtung mit einem auf die Kupplungsvorrichtung der Zentriervorrichtung passenden Kupplungsflansch aufgesetzt: Dadurch ist dann bereits gewährleistet, daß die Aufweitvorrichtung zentrisch zu dem Rohr verläuft.

Mitunter erweist es sich aber auch, daß ein Rohrende gekürzt, schräg geschnitten oder mit einer neuen Schweißlippe versehen werden muß: Auch hier ist erfindungsgemäß die Abdrehvorrichtung mit einer entsprechenden Kupplungsvorrichtung versehen, die es ermöglicht, die Abdrehvorrichtung auf die in einem Rohrende bereits eingespannte Zentriervorrichtung aufzusetzen.

Die beiden zentrierten Rohrenden sind - ggf. nach Beendigung der erläuterten Bearbeitungsvorgänge - für den eigentlichen Schweißvorgang auszurichten. Hierzu werden dann die beiden Zentriervorrichtungen mit Hilfe der Kupplungsvorrichtung verbunden und nach der Ausrichtung der Rohre durch eine in der Kupplungsvorrichtung vorgesehene Arretiervorrichtung fixiert. Die Kupplungsvorrichtung ist hierbei so ausgebildet, daß die Mittelachsen ihrer beiden Hälften - Kupplungsteil und Kupplungszapfen - einen stumpfen Winkel zwischen sich einschließen können: Damit ist es möglich, auch Rohrenden mit entsprechend gegeneinander geneigten Längsachsen miteinander zu verbinden.

Vorzugsweise haben die beiden Hälften der Kupplungsvorrichtung gleichartige Endstücke (gleiche Form, Abmessungen, Schraubbohrungen) und die Zentriervorrichtungen dazu passende Verbindungselemente; die zum Ausrichten zweier Rohrteile benötigten Zentriervorrichtungen können somit identischen Aufbau haben. Zweckmäßigerweise sind die Verbindungselemente zur Aufnahme der Kupplungsteile so ausgebildet, daß der Kupplungszapfen oder der andere Kupplungsteil in unterschiedlicher Lage innerhalb einer Ebene senkrecht zur Achse der Zentriervorrichtung befestigbar ist: Damit ist auch eine axiale Ausrichtung eines Rohres an einem Bogen ohne verlängerte Schenkel möglich.

Die in Verbindung mit einer Zentriervorrichtung verwendbaren und an diese ankuppelbaren Zusatzgeräte haben vorzugsweise einen zentral liegenden Steuerkanal zur Aufnahme von Steuerleitungen, insbesondere von Druckleitungen, sofern der Druckmotor der Zentriervorrichtung hydraulisch arbeitet. Hierbei ist es besonders zweckmäßig, das Zusatzgerät mit einem Einführungsschlitz zu versehen, der sich über die ganze Länge des Zusatzgerätes erstreckt und radial von außen bis zu dem zentralen Steuerkanal reicht: Dies ermöglicht es, das Zusatzgerät an eine in einem Rohrende bereits installierte Zentriervorrichtung anzukuppeln, ohne daß deren Druckleitung unterbrochen werden muß. Beim Ankuppeln des Zusatzgerätes braucht die Druckleitung nur durch den Einführungsschlitz in den Steuerkanal eingelegt zu werden.

Die Erfindung ermöglicht somit eine wesentliche Vereinfachung der Arbeitsverfahren beim Zusammenfügen von Rohrteilen; sie ermöglicht vor allem eine sehr große Flexibilität, die gerade bei der Verlegung von Rohrleitungen auf Montagestellen von großer Bedeutung ist. Die Erfindung ist aber ebenso vorteilhaft auch bei der Anfertigung von Rohrleitungen in der Fabrik verwendbar.

Die Erfindung wird anhand zweier Ausführungsbeispiele näher erläutert; es zeigen

FIG 1   den Querschnitt durch zwei axial miteinander zu verbindende Rohrenden mit den darin sitzenden Zentriervorrichtungen   und

FIG 2   einen Querschnitt durch ein aufzuweitendes Rohrende, in dem eine Zentriervorrichtung mit angekuppelter Aufweitvorrichtung sitzt.

0127053

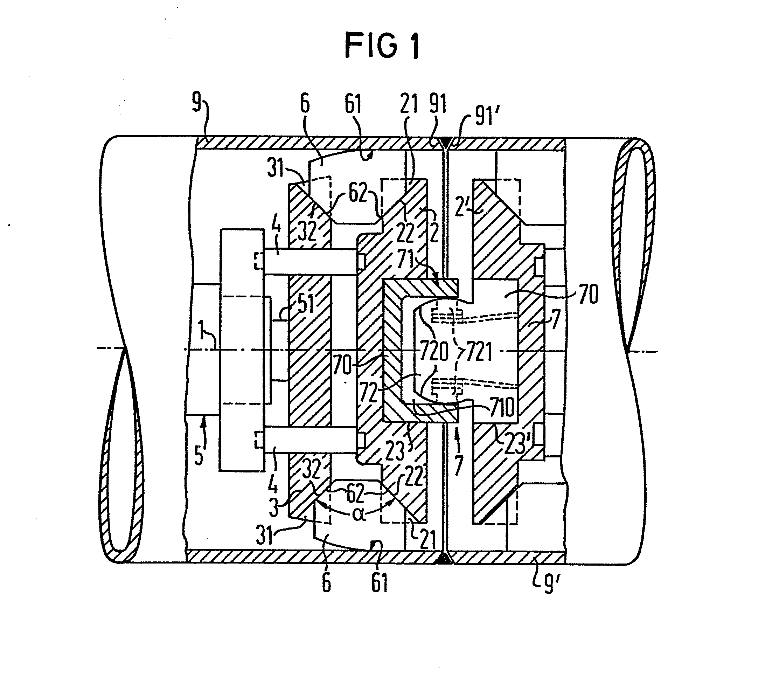

Bei dem in FIG 1 dargestellten Ausführungsbeispiel sind die miteinander zu verschweißenden Rohre 9, 9' bereits durch die in ihnen steckenden Zentriervorrichtungen zentriert und axial ausgerichtet, so daß ihre Schnittstellen 91, 91' keinen Versatz aufweisen.

Die eine, im linken Rohr 9 steckende Zentriervorrichtung besteht aus einer kreisförmigen Grundplatte 2, die über Verbindungsbolzen 4 mit einem hydraulischen Druckmotor 1 verbunden ist. Eine Druckplatte 3 ist auf den Verbindungsbolzen 4 verschiebbar gelagert und liegt an dem Druckkolben 51 des Druckmotors 5 an. Grundplatte 2 und Druckplatte 3 haben gleichmäßig auf den Umfang verteilt radial nach außen verlaufende Schlitze 21, 31, in denen prismatische Druckstücke 6 geführt sind. Die Schlitze weisen gegenläufig geneigte Keilflächen 22, 32 und die Druckstücke 6 ebenso geneigte Lagerflächen 62 auf, so daß die Druckstücke 6 bei einer axialen Verschiebung der Druckplatte 3 radial nach außen gedrückt werden, wobei der Abstand der Druckflächen 61 aller Druckstücke 6 von der Längsachse 1 gleich bleibt. Die Keilflächen 22, 32 und die Lagerflächen 62 schließen miteinander einen stumpfen Winkel $\alpha$ ein, der größer als der Selbsthemmungswinkel ist: Bei der im Ausführungsbeispiel vorgesehenen Gleitlagerung muß dieser Winkel größer 15° sein damit sich die Druckstücke beim Zurückziehen der Druckplatte 3 wieder aus der Verkeillage lösen.

Die Rückführung der Druckstücke kann zusätzlich noch durch radial wirkende Zugfedern unterstützt werden. Auch ist es möglich, die Druckstücke im Bereich der Lagerflächen T-förmig auszubilden und im Bereich der Keilflächen von Grund- und Druckplatte entsprechend ausgebildete Nuten vorzusehen: In diesem Falle würden die Druckstücke beim Auseinanderziehen von Grund- und Druckplatte zwangsweise radial nach innen gezogen.

Alternativ zu dieser Ausführungsform können die im Ausführungsbeispiel dargestellten Keilflächen von Grund- und Druckplatte auch Teil je einer Kegelmantelfläche sein. Die Druckstücke sind dann als Druckrollen mit passenden Kegelmantelflächen ausgebildet, die ebenfalls beim Zusammendrücken von Grund- und Druckplatte gegen die Innenwandung des Rohres 9 gepreßt werden. Hierbei ist dann zusätzlich von außen ein Antriebsmotor anzukuppeln, der die Platten in eine Rotationsbewegung um die Längsachse 1 versetzt.

In dem zweiten Rohrstück 9' sitzt eine zweite Zentriervorrichtung, die ebenso ausgebildet ist wie die zuvor beschriebene und von der lediglich die Grundplatte 2' dargestellt ist. Durch diese Zentriervorrichtung ist das zweite Rohrstück 9' auf den gleichen kreisförmigen Umfang wie das Rohrstück 9 zentriert.

Die Grundplatten 2 und 2' der beiden Zentriervorrichtungen haben gleich geformte Verbindungselemente, hier in Form von Ausnehmungen 23 gleicher Abmessungen, in denen eine die beiden Zentriervorrichtungen axial verbindende Kupplungsvorrichtung 7 sitzt, die aus einem Kupplungsteil 71 mit einer zylindrischen Aufnahme 710 und einem Kupplungszapfen 72 mit einer Kugelfläche 720 besteht. Diese beiden Kupplungsteile weisen Endstücke mit gleicher Form und gleichen Abmessungen auf, die in die Ausnehmungen 23 der Grundplatten passen und mit diesen, z.B. durch Schrauben, verbunden sind.

Die beschriebene Ausbildung der Kupplungsvorrichtung ermöglicht es, die beiden Rohrstücke so auszurichten, daß ihre Längsachsen in einem stumpfen Winkel aufeinanderstoßen; im Ausführungsbeispiel sind sie jedoch so ausgerichtet, daß sich ihre Längsachsen decken. Diese Stellung wird dann durch eine Arretiervorrichtung 721 in der Kupplungsvorrichtung für den Schweißvorgang fixiert. Diese Arretiervorrichtung besteht hier aus zwei gestrichelt angedeuteten Hydraulikkolben, durch die der Kupplungszapfen 72 kraftschlüssig in der Aufnahme 710 gehalten wird.

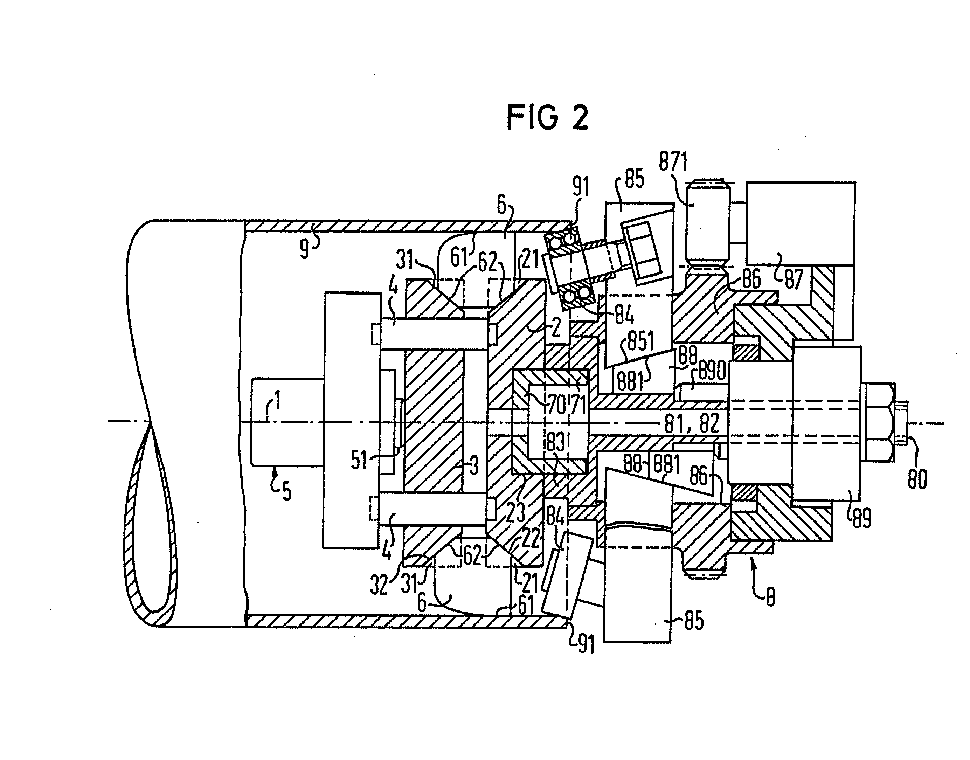

FIG 2 zeigt ein Arbeitsgerät, das aus einer Zentriervorrichtung und einer an diese angekuppelte Aufweitvorrichtung 8 besteht. Die Zentriervorrichtung hat hierbei denselben Aufbau wie die anhand von FIG 1 beschriebene und ist in dem Ende eines Rohres 9 mit einer Schnittstelle 91 eingespannt. Die Grundplatte 2 ist hier ebenfalls mit einem Kupplungsteil 71 ausgestattet, dessen Mittelachse in der Längsachse 1 des Rohres 9 liegt.

Wenn nun beim Zentrieren dieses Rohrendes festgestellt wird, daß sein Durchmesser verglichen mit dem des anzuschweißenden Rohres zu klein ist, dann muß dieses Rohrende aufgeweitet werden. Bei der Erfindung kann hierbei die Zentriervorrichtung in dem Rohr bleiben und dient sogar zur Halterung des Zusatzgerätes in Form einer Aufweitvorrichtung 8. Diese hat eine zentrale Tragachse 80, die mit einem Kupplungsflansch 83 koaxial auf das Kupplungsteil 71 der Zentriervorrichtung aufgesetzt und mit dieser verbunden ist.

Auf der Tragachse 80 ist ein hydraulischer Schubmotor 89 mit einem axial verschiebbaren Kolben 890 angeordnet, der auf einen Schubkeil 88 wirkt, der auf der Tragachse 80 längsverschieblich ist und eine schräg verlaufende Schubfläche 881 hat. In der Figur sind zwei verschiedene Stellungen dieses Schubkeils 88 dargestellt.

Auf der Schubfläche 881 sitzt ein Rollenträger 85 mit einer entsprechend geneigten Keilfläche 851 auf, der radial verschiebbar in einem Rollenläufer 86 geführt ist, der seinerseits koaxial zur Längsachse 1 drehbar gelagert ist und von eiem Rollenantrieb 87 über ein Ritzel 871 angetrieben wird.

In den Rollenträgern 85 sind Rollen 84 drehbar gelagert, wobei ihre Drehachsen einen spitzen Winkel mit der Längsachse 1 des Rohres 9 einschließen. Diese Rollen laufen auf der Innenfläche des Rohres 9 und werden gleichzeitig von dem Schubmotor 89 in das Rohr hineingedrückt, so daß das Rohrende aufgeweitet wird. Ähnlich wie hier beschrieben, kann auch ein Zusatzgerät in Form einer Abdrehvorrichtung an die in dem Rohr sitzende Zentriervorrichtung angekuppelt und dann die Schnittstelle 91 abgedreht oder auf ein anderes Tulpenprofil gedreht werden.

Abweichend von der beschriebenen Aufweitvorrichtung kann auch eine solche angekuppelt werden, die anstelle rotierender Rollen mit einer großen Anzahl radial wirkender, äquidistanter Druckzylinder arbeiten.

Unabhängig von der jeweiligen Bauform des Zusatzgerätes hat dieses einen Steuerkanal 81, der koaxial zur Längsachse 1 verläuft und durch den Steuerleitungen, insbesondere Druckleitungen zu der im Rohr bereits installierten Zentriervorrichtung verlaufen können. Um hierbei das Ankuppeln von eventuell erforderlichen

0127053

Zusatzgeräten an eine bereits im Rohr installierte Zentriervorrichtung und das nachfolgende Abnehmen zu vereinfachen, ist der Steuerkanal 81 durch einen radial über die ganze Länge des Zussatzgerätes nach außen verlaufenden Einführungsschlitz 82 zugänglich: Im Bereich dieses Einführungsschliltzes kann sich die Steuerleitung und die Druckleitungen beim Ankuppeln und beim Lösen des Zussatzgerätes bewegen. Dabei kann es zweckmäßig sein, mindestens ein lösbares Brückenglied vorzusehen, mit dem sich der Einführungsschlitz nach dem Einführen des Druckschlauches schließen läßt und das in der Lage ist, die beim Betrieb des Zusatzgerätes auftretenden Kräfte aufzunehmen und damit die Wandungen des Steuerkanals zu entlasten.

Begriffsliste

|  |  |
|---|---|
|  | Arbeitsgerät |
|  | Zusastzgerät |
|  | Aufweitvorrichtung |
|  | Abdrehvorrichtung |
|  | Zentriervorrichtung |
|  | Spannsystem |
| 1 | Längsachse |
| 2, 2' | Grundplatte |
| 21 | Schlitz |
| 22 | Keilfläche |
| 23, 23' | Verbindungselemente |
| 3 | Druckplatte |
| 31 | Schlitz |
| 32 | Keilfläche |
| 4 | Verbindungsbolzen |
| 5 | Druckmotor |
| 51 | Druckkolben |
| 6 | Druckstücke |
| 61 | Druckfläche |
| 62 | Lagerfläche |
| 7 | Kupplungsvorrichtung |
| 70 | Endstück |
| 71 | Kupplungsteil |
| 710 | Kupplungsaufnahme |
| 72 | Kupplungszapfen |
| 720 | Kugelfläche |
| 721 | Arretiervorrichtung |
| 8 | Aufweitvorrichtung |
| 80 | Tragachse |
| 81 | Steuerkanal |
| 82 | Einführungsschlitz |
| 83 | Kupplungsflansch |
| 84 | Rollen |

**0127053**

83 P 8514 E

| 85 | Rollenträger |
| 851 | Keilfläche |
| 86 | Rollenläufer |
| 87 | Rollenantrieb |
| 871 | Ritzel |
| 88 | Schubkeil |
| 881 | Schubfläche |
| 89 | Schubmotor |
| 890 | Kolben |
| 9, 9' | Rohr |
| 91, 91' | Schnittstelle |

0127053

83 P 8514 E

Patentansprüche

1. Arbeitsgerät zum Bearbeiten der Schnittstelle (91) eines Rohres (9), mit einer in das Endstück des Rohres (9) einsetzbaren Zentriervorrichtung mit einem Spannsystem, das um dessen Längsachse (1) angeordnete Druckstücke (6) aufweist, die durch einen Druckmotor (5) in radialer Richtung so angetrieben sind, daß ihre Druckflächen (61) immer gleichen Abstand von der Längsachse (1) haben, d a d u r c h  g e k e n n z e i c h n e t , daß das Spannsystem zugleich zur Halterung der Zentriervorrichtung in dem Rohr (9) dient und daß die Zentriervorrichtung an einem Ende ihrer Längsachse (1) eine Kupplungsvorrichtung (7) zum Ansetzen eines Zusatzgerätes, z.B. einer weiteren Zentriervorrichtung, einer Aufweitvorrichtung (8) oder einer Abdrehvorrichtung, aufweist.

2. Arbeitsgerät nach Anspruch 1, d a d u r c h  g e - k e n n z e i c h n e t , daß die Kupplungsvorrichtung (7) aus einem Kupplungsteil (71) mit einer zylindrischen Aufnahme (710) und einem Kupplungszapfen (72) mit einer in die Aufnahme (710) passenden Kugelfläche (720) besteht.

3. Arbeitsgerät nach Anspruch 2, g e k e n n z e i c h - n e t  durch eine Arretiervorrichtung (721) zur Fixierung von Kupplungsteil (71) und Kupplungszapfen (72) in einer eingestellten Position.

4. Arbeitsgerät nach Anspruch 2 oder 3, d a d u r c h g e k e n n z e i c h n e t , daß Kupplungsteil (71) und Kupplungszapfen (72) ein gleichartig ausgebildetes und an Verbindungselemente (23, 23') der Zentriervorrichtung angepaßtes Endstück (70) haben, so, daß die Zentriervorrichtung wahlweise mit dem Kupplungsteil (71) oder dem Kupplungszapfen (72) verbindbar ist.

5. Arbeitsgerät nach Anspruch 3 oder 4, d a d u r c h g e k e n n z e i c h n e t , daß die Kupplungsvorrichtung (7) so an der Zentriervorrichtung befestigt ist, daß die Achsen von Kupplungsteil (71) und Kupplungszapfen (72) mit der Längsachse (1) der Zentriervorrichtung zusammenfallen.

6. Arbeitsgerät nach Anspruch 3 oder 4, d a - d u r c h g e k e n n z e i c h n e t , daß Kupplungsteil (71) und/oder Kupplungszapfen (72) in einer Ebene senkrecht zu der Längsachse (1) der Zentriervorrichtung verstellbar angeordnet sind.

7. Arbeitsgerät nach einem der Ansprüche 1 bis 6, d a d u r c h g e k e n n z e i c h n e t , daß die Zentriervorrichtung eine Grundplatte (2) und eine ihr gegenüber in Richtung der Längsachse (1) durch den Druckmotor (5) verschiebbare Druckplatte (3) aufweist, daß Grund- und Druckplatte (2, 3) radial nach außen gerichtete Keilflächen (22, 32) haben, die miteinander einen stumpfen Winkel $(\alpha)$ einschließen und auf denen die Druckstücke (6) mit gegenläufig keilförmigen Lagerflächen (62) aufliegen, wobei der Winkel größer als der Selbsthemmungswinkel ist.

8. Arbeitsgerät nach Anspruch 7, d a d u r c h g e - k e n n z e i c h n e t , daß Grund- und Druckplatte um die Längsachse der Zentriervorrichtung drehbar angeordnet und die Keilflächen als Kegelmantelflächen ausgebildet sind, daß die Druckstücke als Druckrollen ausgebildet und auf den Kegelmantelflächen gelagert sind und daß mit Hilfe der Kupplungsvorrichtung

**0127053**

ein Antriebsmotor ankuppelbar ist, der die Grund- und Druckplatte in eine Rotationsbewegung um die Längsachse versetzt.

9. Arbeitsgerät nach Anspruch 7, d a d u r c h  g e - k e n n z e i c h n e t , daß die Druckstücke (6) in radialen Schlitzen (21, 31) von Grund- und Druckplatte (2, 3) geführt sind.

10. Arbeitsgerät nach Anspruch 9, d a d u r c h  g e - k e n n z e i c h n e t , daß Druckstücke unterschiedlicher radialer Länge in die Schlitze (21, 31) einsetzbar sind.

11. Arbeitsgerät nach Anspruch 10, d a d u r c h  g e - k e n n z e i c h n e t , daß die Druckstücke (6) Verstellmittel zum Einstellen unterschiedlicher radialer Länge aufweisen.

12. Arbeitsgerät nach einem der Ansprüche 1 bis 11, g e k e n n z e i c h n e t  durch einen zentralen, koaxial angeordneten Steuerkanal (8), der auch die Kupplungsvorrichtung (7) durchsetzt.

13. Arbeitsgerät nach Anspruch 12, d a d u r c h  g e k e n n z e i c h n e t , daß der Druckmotor (5) ein Hydraulikmotor mit einem um den Steuerkanal (8) angeordneten Ringzylinder ist, und daß die Druckleitungen durch den Steuerkanal (8) geführt sind.

14. Arbeitsgerät nach Anspruch 12 oder 13, d a - d u r c h  g e k e n n z e i c h n e t , daß das Zusatzgerät (10) einen radial bis zum Steuerkanal (8) verlaufenden Einführungsschlitz (100) aufweist, der sich über die ganze Länge des Zusatzgerätes erstreckt, so daß es über die Druckleitungen des bereits in einem Rohrende steckenden Zentriergerätes auf letzteres aufsetzbar ist.

FIG 1

0127053

83 P 8514

FIG 2